# EUROPÄISCHE PATENTSCHRIFT

(11) **EP 1 527 402 B1**
(45) Veröffentlichungstag und Bekanntmachung des Hinweises auf die Patenterteilung: **11.04.2007**
(21) Anmeldenummer: 03787728.9
(22) Anmeldetag: 23.07.2003
(51) Int. Cl.: G06Q 10/00

(54) **SYSTEM UND VERFAHREN ZUR ZUSTANDSORIENTIERTEN INSTANDHALTUNG**
SYSTEM AND METHOD FOR CONDITION-BASED MAINTENANCE
SYSTEME ET PROCEDE DE MAINTENANCE BASEE SUR L'ETAT

(30) Priorität: 05.08.2002 DE 10235794
(43) Veröffentlichungstag der Anmeldung: 04.05.2005
(73) Patentinhaber: SIEMENS AKTIENGESELLSCHAFT, 80333 München (DE)
(72) Erfinder: DEUSSER, Stefan, 90429 Nürnberg (DE); DAUSS, Torsten, 90480 Nürnberg (DE)
(86) Internationale Anmeldenummer: PCT/DE2003/002485
(87) Internationale Veröffentlichungsnummer: WO 2004/017235

(56) Entgegenhaltungen:
- WO-A-01/31450
- US-A1- 2002 049 053

## Beschreibung

Die Erfindung betrifft ein System und ein Verfahren zur zustandsorientierten Instandhaltung von Maschinen, Anlagen und Betriebsmitteln.

Die Druckschrift WO 01/31450 zeigt ein System zur Instandhaltung mindestens einer Lokomotive, die eine dezentrale technische Anlage darstellt. Die Zustandswerte der Lokomotive werden von einem lokalen Überwachungssystem erfaßt und regelmäßig an ein zentrales Instandhaltungs-Management-System in Form eines Datensatzes übermittelt. Hier wird ein auf diese Weise geladener Datensatz analysiert. Wird bei dieser Analyse ein Problem erkannt, generiert das zentrale Instandhaltungs-Management-System einen Auftrag, der automatisch per E-Mail an einen Eisanbahnwartungstechniker abgesetzt wird.

Die WO 01/59972 A2 beschreibt ein Verfahren zur Instandhaltung von Komponenten. Im Verfahren wird bestimmt, dass eine bestimmte Komponente instand gehalten werden muss. Es wird automatisch ein Instandhaltungsprozess mit mindestens einer Instandhaltungsaufgabe ausgewählt, um diese Instandhaltung durchzuführen. Der Instandhaltungsprozess wird auf einem Instandhaltungsserver verwaltet und überwacht.

Aus EP 0 822 473 A2 ist ein System zur Instandhaltung von verteilten industriellen Anlagen bekannt. Dabei werden die industriellen Anlagen in verteilten Fabriken durch Host-Computer überwacht. Jeder dieser Host-Computer ist mit einem Management-Host-Computer auf Lieferantenseite über das Internet verbunden. Der Host-Computer auf Kundenseite übermittelt Fehlermeldungen der industriellen Anlagen an den Lieferanten. Daraufhin liefert der Host-Computer auf Lieferantenseite Informationen über mögliche Gegenmaßnahmen an den Host-Computer auf Kundenseite.

WO 00/62138 beschreibt ein Verfahren und ein System zur Durchführung der Instandhaltung einer Produktionsanlage, insbesondere in der Papierindustrie. Dabei wird Information über den Produktionsprozess an eine entfernte Serviceeinheit gegeben, wo diese Information gesammelt und analysiert wird. Die Übertragung zwischen Produktionsanlage und Serviceeinheit erfolgt über das Internet, wobei die jeweiligen internen Datennetze durch Fire Walls vom Internet selbst getrennt werden.

Aus US 6,317,701 B1 ist ein Instandhaltungssystem bekannt, bei welchem Daten von intelligenten Feldgeräten an ein lokales Instandhaltungsmanagement-System übertragen werden. Die gesammelten Daten werden über das Internet an einen globalen Instandhaltungsserver übermittelt.

Der Erfindung liegt die Aufgabe zugrunde, eine durchgängige Lösung zur zustandsorientierten Instandhaltung von insbesondere verteilten technischen Anlagen aufzuzeigen.

Diese Aufgabe wird gelöst durch ein System zur zustandsorientierten Instandhaltung mindestens einer dezentralen technischen Anlage, mit Erfassungsmitteln zur Erfassung von Zustandswerten der technischen Anlage, mit Übertragungsmitteln zur Übertragung der erfassten Zustandswerte in ein zentrales Instandhaltungs-Management-System, welches erste Mittel zur Auswertung der Zustandswerte und zweite Mittel zur Generierung von Instandhaltungsaufträgen in Abhängigkeit eines Ergebnisses der Auswertung der Zustandswerte aufweist.

Diese Aufgabe wird gelöst durch ein Verfahren zur zustandsorientierten Instandhaltung mindestens einer dezentralen technischen Anlage, bei welchem mit Erfassungsmitteln Zustandswerte der technischen Anlage erfasst werden, mit Übertragungsmitteln die erfassten Zustandswerte in ein zentrales Instandhaltungs-Management-System übertragen werden, wobei das zentrale Instandhaltungs-Management-System mit ersten Mitteln die Zustandswerte auswertet und mit zweiten Mitteln Instandhaltungsaufträge in Abhängigkeit eines Ergebnisses der Auswertung der Zustandswerte generiert.

Immer mehr Maschinen, Anlagen und Betriebsmittel werden mit einem Wartungsvertrag verkauft. Ein Teil dieser Wartung ist die zustandsorientierte Instandhaltung (Condition Based Maintenance), bei der erst bei Erreichen eines bestimmten Zustands eine Instandhaltung ausgelöst wird. Die Erfindung beruht auf der Idee, die Zustandsdaten der bei dem Kunden installierten Anlagen in ein zentrales Instandhaltungs-Management-System des Maschinenherstellers zur Auswertung zu übertragen. Analog ist diese Systematik auch innerhalb eines Unternehmens im Rahmen einer zentralen zustandsorientierten Instandhaltung anwendbar. Dabei wird die zustandsorientierte Instandhaltung mit Hilfe des Instandhaltungs-Management-Systems durch eine zentrale Organisation angelegt, überwacht, ausgeführt und/oder dokumentiert. Um eine Anlage zentral für die zustandsorientierte Instandhaltung verwalten zu können, werden die erfassten Zustandswerte an die Zentrale übertragen. In der Zentrale können dann Instandhaltungsaufträge im Instandhaltungs-Management-System generiert, geplant und dokumentiert werden.

Gemäß einer vorteilhaften Ausgestaltung der Erfindung sind die zweiten Mittel des zentralen Instandhaltungs-Management-Systems zur Generierung von Instandhaltungsaufträgen entsprechend vordefinierter Regeln vorgesehen. Dies ermöglicht eine besonders schnelle und effektive Generierung von Instandhaltungsaufträgen. Die vordefinierten Regeln liegen dabei in Form von festen Verknüpfungen, als Wissensbasis oder auch in Form eines anpassungsfähigen Expertensystems vor.

Zur weitergehenden Unterstützung der zustandsorientierten Instandhaltung weist das zentrale Instandhaltungs-Management-System dritte Mittel zur Ausführung, Überwachung und/oder Dokumentation der generierten Instandhaltungsaufträge auf. Ein solchermaßen ausgestaltetes Instandhaltungs-Management-System geht weit über die im Stand der Technik bekannten Instandhaltungsserver hinaus.

Vorteilhafterweise werden die Übertragungsmittel zur Übertragung der erfassten Zustandswerte mittels E-Mail vorgesehen. Die Übertragung mittels E-Mail bietet den Vorteil, dass keine durchgehend offene Internetverbindung erforderlich ist. Die E-Mail-Übertragung ist ein bekannter und erprobter zuverlässiger Standardmechanismus im Internet. Die Vorgänge senden und empfangen, sind dabei zeitlich entkoppelt, ohne dass die Gefahr besteht, dass übertragene Zustandswerte verloren gehen.

Gemäß einer weiteren vorteilhaften Ausgestaltung der Erfindung sind die Übertragungsmittel zur Übertragung der erfassten Zustandswerte durch http-Transfer vorgesehen. Auf Anlagenseite werden also die erfassten Zustandswerte in eine entsprechend konfigurierte Internetseite gespeichert, welche dann durch das zentrale Instandhaltungs-Management-System zu beliebigen oder zu zuvor festgesetzten Zeitpunkten abrufbar ist.

Vorteilhafterweise sind die Erfassungsmittel Teil einer speicherprogrammierbaren Steuerung oder eines SCADA-Systems.

In einer weiteren vorteilhaften Ausgestaltung der Erfindung ist das Instandhaltungs-Management-System mit einem Industrial Framework System verknüpft bzw. in ein solches System eingebunden.

Nachfolgend wird die Erfindung anhand der in den Figuren dargestellten Ausführungsbeispiele näher beschrieben und erläu4tert.

Es zeigen:
- FIG 1: ein System zur zustandsorientierten Instandhaltung einer dezentralen technischen Anlage,
- FIG 2: eine prinzipielle Darstellung eines solchen Systems mit Nutzung verschiedenartiger Übertragungsmittel zur Übertragung der erfassten Zustandswerte,
- FIG 3: die Übertragung der erfassten Zustandswerte mittels E-Mail-Kommunikation und
- FIG 4: die Übertragung der erfassten Zustandswerte mittels HTTP-Kommunikation.

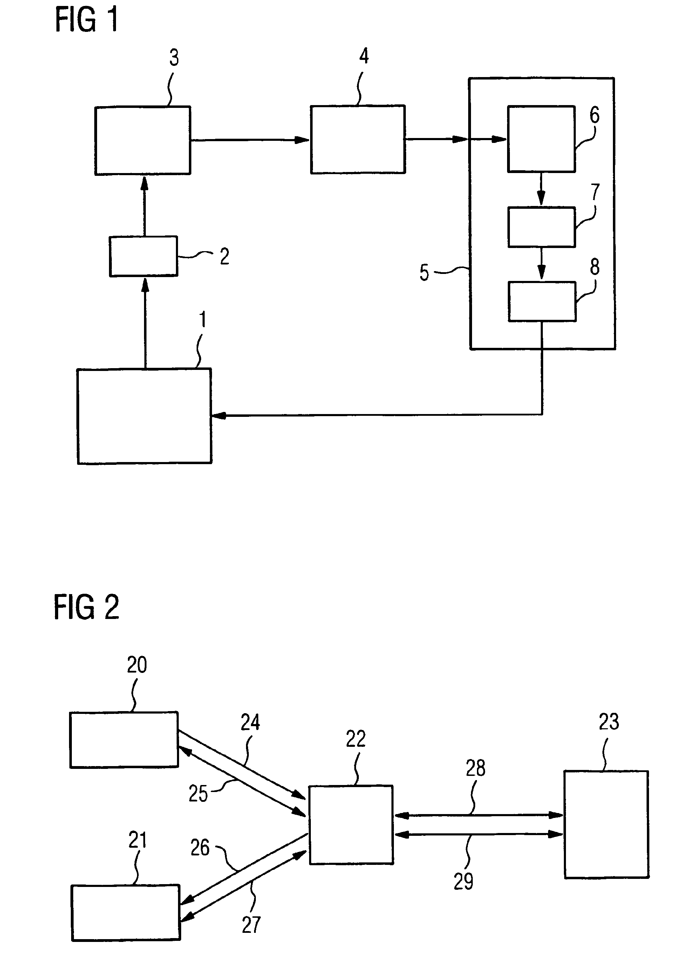

FIG 1 zeigt ein System zur zustandsorientierten Instandhaltung einer dezentralen technischen Anlage 1. Mit Erfassungsmitteln 2 werden Zustandswerte (sogenannte Tag-Werte) der technischen Anlage 1 erfasst, welche mit Übertragungsmitteln 3, 4 an ein zentrales Instandhaltungs-Management-System 5 übertragen werden. Das Instandhaltungs-Management-System 5 enthält erste Mittel 6 zur Auswertung der Zustandswerte und zweite Mittel 7 zur Generierung von Instandhaltungsaufträgen 8 in Abhängigkeit eines Ergebnisses der Auswertung der Zustandswerte. Die Auswertung der Zustandswerte besteht z. B. in einer Evaluierung ob der jeweilige Zustandswert innerhalb vorgegebener Grenzwerte liegt. Die zweiten Mittel 7 können z. B. zur Generierung von Instandhaltungsaufträgen 8 entsprechend vordefinierter Regeln vorgesehen sein. Ein solcher Instandhaltungsauftrag 8 bestimmt und beschreibt z. B., welche Instandhaltungsaktivitäten ausgeführt werden müssen (z. B. Ölwechsel), welche Ressourcen (Material, Personal, Werkzeuge etc.) erforderlich sind, welche Fristen einzuhalten sind u. Ä.

FIG 2 zeigt eine prinzipielle Darstellung eines Systems zur zustandsorientierten Instandhaltung mindestens einer dezentralen technischen Anlage mit Nutzung verschiedenartiger Übertragungsmittel zur Übertragung der erfassten Zustandswerte. Im Ausführungsbeispiel wird eine dezentrale technische Anlage durch eine speicherprogrammierbare Steuerung 20 (SPS) bzw. durch ein SCADA-System 21 (Supervisory Control and Data Acquisition-System = Überwachungs- und Datenerfassungssystem) gesteuert. In der SPS bzw. im SCADA-System sind verschiedenartige Prozessparameter verfügbar. Ein Teil dieser Prozessparameter (z. B. Betriebsstunden, Schaltspiele, Druck, Temperatur usw.) kann den Zustand der dezentralen technischen Anlage bzw. den Zustand von Teilen der Anlage in Bezug auf erforderliche Instandhaltungsmaßnahmen beschreiben. Diese Prozessparameter werden zur instandhaltungstechnischen Auswertung in einer Zentrale an ein zentrales Instandhaltungs-Management-System 23 in bestimmten Intervallen bzw. bei einem vorher definierten Ereignis übertragen. Im Rahmen einer kostengünstigen und standardisierten Gesamtlösung erfolgt die Übertragung der Zustandswerte über das Internet 22 mittels E-Mail-Kommunikation 24, 26, 28 bzw. mittels HTTP-Kommunikation 25, 27, 29. Die Zustandswerte werden direkt in das Instandhaltungs-Management-System 23 importiert und durch dieses ausgewertet, d. h. das Instandhaltungs-Management-System 23 generiert Instandhaltungsaufträge bzw. löst Instandhaltungsalarme aus. Das beschriebene globale Instandhaltungsszenario stellt eine durchgängige Lösung dar, von der Datenerfassung in der Automatisierungstechnik bis hin zur Auswertung im Instandhaltungs-Management-System 23 und der dazugehörigen Datenübertragung.

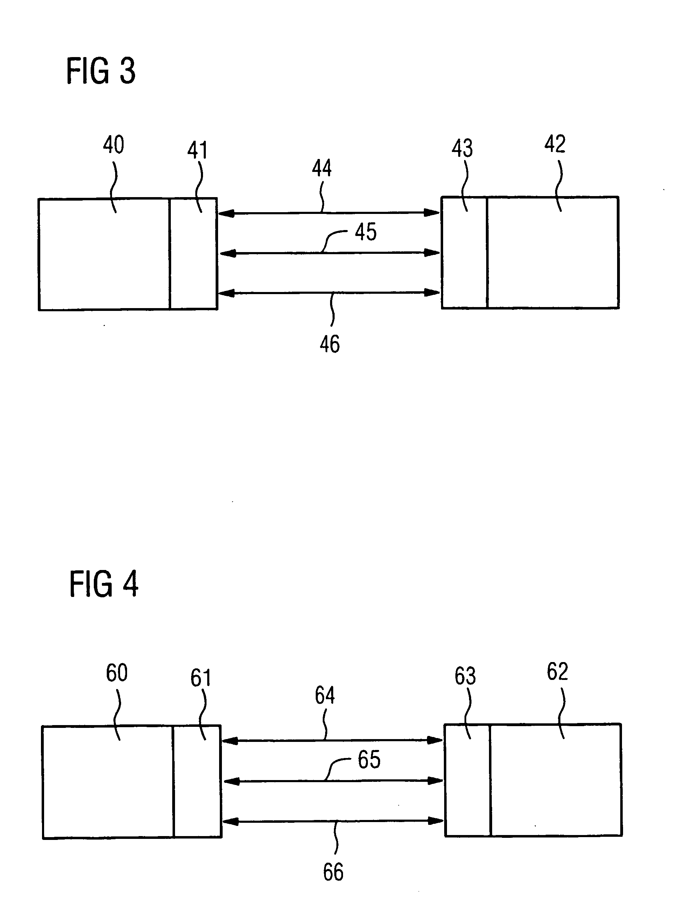

FIG 3 zeigt die Übertragung der erfassten Zustandswerte mittels E-Mail-Kommunikation. Ein Personalcomputer (PC) in der instandzuhaltenden dezentralen technischen Anlage auf Kundenseite, ein so genannter Instandhaltungsclient 40 weist ein Interface 41 auf, z. B. ein Modem, ein LAN- bzw. ein Internetzugang. Der Instandhaltungsclient 40 auf Kundenseite überträgt Instandhaltungsdaten und -alarme zum globalen, zentralen Instandhaltungsserver 42. Zudem ermöglicht der Instandhaltungsclient 40 das Online-Lesen mittels OPC-Server (OLE for Process Control-Server) direct von der SPS, das Offline-Lesen mittels händischer Eingabe in einen Web GUI (Graphical User Interface) sowie den Webzugriff zu einem örtlichen, anlagenspezifischen Instandhaltung-Management-System. Auf Lieferantenseite realisiert ein Instandhaltungsserver 42 die Funktionen des Instandhaltungs-Management-Systems. Der Instandhaltungsserver 42 weist ebenfalls ein Interface 43 auf. Die Kommunikation zwischen Instandhaltungsclient 40 und Instandhaltungsserver 42 erfolgt über das Internet bzw. über ein Local Area Network (LAN). Über eine E-Mail-Verbindung 44 liefert der Instandhaltungsclient 40 sogenannte XML-Tags an den Instandhaltungsserver 42. Eine LAN- oder Internet-Verbindung ermöglicht ein Online-/Remote-Engineering 45 (Application Sharing) des Instandhaltungsclients 40 auf Kundenseite. Der Instandhaltungsclient 40 kann über eine LAN-/Internet-Verbindung 46 auf den Instandhaltungsserver 42 zugreifen.

FIG 4 zeigt die Übertragung der erfassten Zustandswerte mittels HTTP-Kommunikation. Ein Personalcomputer (PC) in der instandzuhaltenden dezentralen technischen Anlage auf Kundenseite, ein so genannter Instandhaltungsclient 60 weist ein Interface 61 auf, z. B. ein Modem, ein LAN- bzw. ein Internetzugang. Auf Lieferantenseite realisiert ein Instandhaltungsserver 62 die Funktionen des Instandhaltungs-Management-Systems. Der Instandhaltungsserver 62 weist ebenfalls ein Interface 63 auf. Die Kommunikation zwischen Instandhaltungsclient 60 und Instandhaltungsserver 62 erfolgt über das Internet bzw. über ein Local Area Network (LAN). Über eine HTTP-Verbindung 64 kann der Instandhaltungsserver 42 vom Instandhaltungsclient 60 sogenannte XML-Tags abfragen. Eine LAN- oder Internet-Verbindung ermöglicht ein Online-Engineering 65 (Application Sharing). Der Instandhaltungsclient 60 kann über eine LAN-/Internet-Verbindung 66 auf den Instandhaltungsserver 62 zugreifen.

Zusammenfassend betrifft die Erfindung somit ein System sowie ein Verfahren zur zustandsorientierten Instandhaltung mindestens einer dezentralen technischen Anlage 1 bzw. von Maschinen und Betriebsmitteln einer solchen Anlage 1. Das System enthält Erfassungsmittel 2 zur Erfassung von Zustandswerten der technischen Anlage 1 und Übertragungsmittel 3, 4 zur Übertragung der erfassten Zustandswerte in ein zentrales Instandhaltungs-Management-System 5, welches erste Mittel 6 zur Auswertung der Zustandswerte und zweite Mittel 7 zur Generierung von Instandhaltungsaufträgen 8 in Abhängigkeit eines Ergebnisses der Auswertung der Zustandswerte aufweist. Die zustandsorientierte Instandhaltung Condition Based Maintenance erfolgt insbesondere mit einem globalen Instandhaltungs-Management-System 5 durch Übertragung von Zustandswerten aus einem Automatisierungssystem (z. B. SPS, SCADA) via E-Mail bzw. HTTP-Transfer.

## Patentansprüche

1. System zur zustandsorientierten Instandhaltung mindestens einer dezentralen technischen Anlage (1), mit Erfassungsmitteln (2) zur Erfassung von Zustandswerten der technischen Anlage (1), mit Übertragungsmitteln (3, 4) zur Übertragung der erfassten Zustandswerte in ein zentrales Instandhaltungs-Management-System (5), welches erste Mittel (6) zur Auswertung der Zustandswerte und zweite Mittel (7) zur Generierung von Instandhaltungsaufträgen (8) in Abhängigkeit eines Ergebnisses der Auswertung der Zustandswerte aufweist, wobei die Übertragungsmittel (3, 4) zur Übertragung der erfassten Zustandswerte mittels E-Mail vorgesehen sind.

2. System nach Anspruch 1,
**dadurch gekennzeichnet,**
**dass** die zweiten Mittel (7) des zentralen Instandhaltungs-Management-Systems (5) zur Generierung von Instandhaltungsaufträgen (8) entsprechend von Regeln vorgesehen sind.

3. System nach Anspruch 1 oder 2,
**dadurch gekennzeichnet,**
**dass** das zentrale Instandhaltungs-Management-System (5) dritte Mittel zur Ausführung, Überwachung und/oder Dokumentation der generierten Instandhaltungsaufträge (8) aufweist.

4. System nach einem der vorhergehenden Ansprüche,
**dadurch gekennzeichnet,**
**dass** die Übertragungsmittel (3, 4) zur Übertragung der erfassten Zustandswerte durch HTTP-Transfer vorgesehen sind.

5. System nach einem der vorhergehenden Ansprüche,
**dadurch gekennzeichnet ,**
**dass** die Erfassungsmittel (2) Teil einer speicherprogrammierbaren Steuerung (20) oder eines SCADA-Systems (21) sind.

6. System nach einem der vorhergehenden Ansprüche,
**dadurch gekennzeichnet,**
**dass** das Instandhaltungs-Management-System (5) mit einem Industrial Framework System verknüpft ist.

7. Verfahren zur zustandsorientierten Instandhaltung mindestens einer dezentralen technischen Anlage (1), bei welchem mit Erfassungsmitteln (2) Zustandswerte der technischen Anlage (1) erfasst werden, mit Übertragungsmitteln (3, 4) die erfassten Zustandswerte mittels E-Mail in ein zentrales Instandhaltungs-Management-System (5) übertragen werden, wobei das zentrale Instandhaltungs-Management-System (5) mit ersten Mitteln (6) die Zustandswerte auswertet und mit zweiten Mitteln (7) Instandhaltungsaufträge. (8) in Abhängigkeit eines Ergebnisses der Auswertung der Zustandswerte generiert.

## Claims

1. System for condition-based maintenance of at least one decentralized technical installation (1), with recording means (2) for recording condition values of the technical installation (1), with transmission means (3,4) for transmission of the recorded condition values to a central maintenance management system (5), that has a first means (6) for evaluation of the condition values and a second means (7) for generation of maintenance orders (8) depending on the result of the evaluation of the condition values, with the transmission means (3, 4) being provided to transmit the recorded condition values by e-mail transfer.

2. System in accordance with claim 1,
**characterized in that**
the second means (7) of the central maintenance management system (5) is provided for the generation of maintenance orders (8) corresponding to predefined rules.

3. System in accordance with claim 1 or 2,
**characterized in that**
the central maintenance management system (5) has a third means for the implementation, monitoring and/or documentation of the generated maintenance orders (8).

4. System in accordance with one of the preceding claims,
**characterized in that**
the transmission means (3, 4) is provided for the transmission of the recorded condition values by means of HTTP transfer.

5. System in accordance with one of the preceding claims,
**characterized in that**
the recording means (2) is part of a stored program controller (20) or a SCADA system (21).

6. System in accordance with one of the preceding claims,
**characterized in that**
the maintenance management system (5) is linked to an industrial framework system.

7. Method for the condition-based maintenance of at least one decentralized technical installation (1), in which condition values of the technical installation (1) are recorded by means of recording means (2), the recorded condition values are transmitted using e-mail to a central maintenance management system (5) by means of transmission means (3,4), with the central maintenance management system (5) evaluating the condition values by means of first means (6) and maintenance orders (8) being generated by second means (7) depending on the result of the evaluation of the condition values.

## Revendications

1. Système pour la maintenance basée sur l'état d'au moins une installation technique décentralisée (1), ayant des moyens d'acquisition (2) pour l'acquisition de valeurs d'état de l'installation technique (1) et avec des moyens de transmission (3, 4) pour la transmission des valeurs d'état acquises à un système de gestion de maintenance central (5) qui comporte des premiers moyens (6) pour l'évaluation des valeurs d'état et des deuxièmes moyens (7) pour la production de tâches de maintenance (8) en fonction d'un résultat de l'évaluation des valeurs d'état, les moyens de transmission (3, 4) étant prévus pour la transmission des valeurs d'état acquises au moyen de courriers électroniques.

2. Système selon la revendication 1,
**caractérisé par le fait que** les deuxièmes moyens (7) du système de gestion de maintenance central (5) sont prévus pour la production de tâches de maintenance (8) en fonction de règles.

3. Système selon la revendication 1 ou 2,
**caractérisé par le fait que** le système de gestion de maintenance central (5) comporte des troisièmes moyens pour la réalisation, la surveillance et/ou la documentation des tâches de maintenance (8) produites.

4. Système selon l'une des revendications précédentes,
**caractérisé par le fait que** les moyens de transmission (3, 4) sont prévus pour la transmission des valeurs d'état acquises par transfert HTTP.

5. Système selon l'une des revendications précédentes,
**caractérisé par le fait que** les moyens d'acquisition (2) font partie d'une commande par programme enregistré (20) ou d'un système SCADA (21).

6. Système selon l'une des revendications précédentes,
**caractérisé par le fait que** le système de gestion de maintenance central (5) est combiné à un système dit Industrial Framework System.

7. Procédé pour la maintenance basée sur l'état d'au moins une installation technique décentralisée (1), dans lequel on acquiert avec des moyens d'acquisition (2) des valeurs d'état de l'installation technique (1) et on transmet par des moyens de transmission (3, 4) les valeurs d'état acquises à un système de gestion de maintenance central (5) au moyen de courriers électroniques, le système de gestion de maintenance central (5) évaluant par des premiers moyens (6) les valeurs d'état et produisant par des deuxièmes moyens (7) des tâches de maintenance (8) en fonction d'un résultat de l'évaluation des valeurs d'état.
